Europäisches Patentamt

European Patent Office

Office européen des brevets

(11) Veröffentlichungsnummer: **0 393 645**
**A2**

# (12) EUROPÄISCHE PATENTANMELDUNG

(21) Anmeldenummer: **90107381.7**

(22) Anmeldetag: **19.04.90**

(51) Int. Cl.5: **D01F 1/04**

(30) Priorität: **19.04.89 DE 3912738**

(43) Veröffentlichungstag der Anmeldung:
**24.10.90 Patentblatt 90/43**

(84) Benannte Vertragsstaaten:
**AT BE CH DE DK ES FR GB GR IT LI NL SE**

(71) Anmelder: **LIPPMANN TAUWERK GMBH**
**Dubbenwinkel 11**
**D-2104 Hamburg 92(DE)**

(72) Erfinder: **Krokeide, Gunnar**
**Trittauer Strasse 2**
**D-2073 Lütjensee(DE)**
Erfinder: **Lippman, Klaus**
**Dubbenwinkel 11**
**D-2104 Hamburg 92(DE)**

(74) Vertreter: **Dipl.-Ing. H. Hauck Dipl.-Ing. E.**
**Graalfs Dipl.-Ing. W. Wehnert Dr.-Ing. W.**
**Döring**
**Neuer Wall 41**
**D-2000 Hamburg 36(DE)**

(54) Verfahren zur Herstellung nachleuchtender synthetischer Spinnmaterialien sowie daraus hergestelltes Textilerzeugnis.

(57) Verfahren zur Herstellung nachleuchtender synthetischer Spinnmaterialien, insbesondere Fasern, Fäden oder Folien, bei dem ein Kunststoff aus der Gruppe der Thermoplaste zusammen mit Leuchtkristallen extrudiert wird, dadurch gekennzeichnet, daß die Leuchtkristalle einer Größe im Bereich von 10 bis 40 $\mu$m vor dem Extrudieren mit zumindest einem Teil des in Pulverform vorliegenden Kunststoffes vermengt wird, dann das Gemenge pelletiert wird, anschliessend die Kristalle enthaltenden Kunststoffpellets ggfs. zusammen mit leuchtstoffreiem Kunststoff in den Extruder eingegeben werden, und das erhaltene Extrudat in einem weiteren Schritt verstreckt wird.

EP 0 393 645 A2

# Verfahren zur Herstellung nachleuchtender synthetischer Spinnmaterialien sowie daraus hergestelltes Textilerzeugnis

Die Erfindung bezieht sich auf ein Verfahren nach dem Oberbegriff des Anspruches 1 sowie auf ein daraus hergestelltes Textilerzeugnis nach dem Oberbegriff des Anspruches 8.

Die Verwendung nachleuchtender Substanzen ist heutzutage z.B. im Mode- oder Sicherheitsbereich weit verbreitet. Nachleuchtende Substanzen zeichnen sich dadurch aus, daß sie durch sichtbares oder ultraviolettes Licht anregbar sind und nach Beendigung der Anregung über einen gewissen Zeitraum hinweg selbst Licht abgeben.

Typische Vertreter sind die in Kristallform vorliegenden sogenannten Lenard-Phosphore, die als lichtempfindliche Grundsubstanzen Metallsulfide wie z.B. Calcium-, Zink-, Magnesiumsulfid etc. enthalten. Zur Erhöhung der Leuchtkraft werden in die Kristallstruktur Schwermetalle wie Kupfer, Thallium, Silber etc. als Aktivatoren eingelagert. Man bezeichnet diesen Vorgang als Dotierung.

Besonders vielfältige Anwendungsmöglichkeiten ergeben sich, wenn man nachleuchtende Kristalle mit Ausgangsmaterialien verbindet, die dann in unterschiedlicher Weise verarbeitet werden können. Ein Beispiel dafür ist in der DE-OS 37 16 686 aufgeführt, die ein Verfahren zur Herstellung nachleuchtender Garne offenbart. Das Verfahren besteht darin, ein texturiertes Garn oder textiles Flächengewebe mit einer Dispersion aus einem Bindemittel und Leuchtkristallen zu benetzen. Die Benetzung kann analog zu bekannten Imprägnierverfahren erfolgen und führt zu einer Einlagerung der Kristalle in den Faserverbund des Garnes. Das Garn kann dann in üblicher Weise verarbeitet werden. Ein Nachteil des Verfahrens ist jedoch darin zu sehen, daß sich die relativ empfindlichen Leuchtkristalle auf der Außenseite der Einzelfasern befinden, aus denen das Garn aufgebaut ist. Dort sind sie z.B. UV-Bestrahlung und Scherkräften mehr oder weniger ungeschützt ausgeliefert und werden darüber hinaus leicht durch Reibung bzw. Abwaschen abgetragen. Dies führt zu einer Verringerung der Nachleuchtkraft. Ein weiterer Nachteil dieses Erzeugnisses besteht in der grösseren Dehnbarkeit und geringeren Festigkeit infolge des Texturierens, so daß es vornehmlich bei Textilien zur Anwendung kommt.

Nach einem aus der DE-OS 33 28 075 bekannten Verfahren wird thermoplastisches Trägermaterial in einem Extruder aufgeschmolzen, dann in einer zweiten Aufgabestelle Leuchtpigment aufgegeben und die Schmelze des Trägermaterials mit dem Leuchtpigment vermischt. Das Zudosieren der Pigmente kann auch nach einem Komprimieren, Aufschmelzen und Entspannen des Trägermaterials erfolgen. Das Mischen von Trägermaterial und Leuchtpigmenten im Extruder hat jedoch den Nachteil eines hohen apparativen Aufwands, weil dafür eine Spezialschnecke erforderlich ist. Außerdem ergibt sich dabei eine Anreicherung der deutlich schwereren Leuchtpigmente in den unteren Bereichen der Kunststoffschmelze, die zu einer schlechteren Verteilung der Pigmente auch in der plastifizierten Masse führt. Schließlich werden die Leuchtpigmente beim Vermischen und Extrudieren mit dem Trägermaterial erheblichen Scherkräften ausgesetzt, welche den Nachleuchteffekt beträchtlich herabsetzen. Die solchermaßen hergestellten Filamente sind für die Verwen dung als Angelleine, Vorfächer für Angelköder oder Rohstoff für künstliche Köder gedacht und haben eine relativ geringe Nachleuchtkraft.

Davon ausgehend liegt der Erfindung die Aufgabe zugrunde, ein Verfahren zu schaffen, mit dem sich nachleuchtende, synthetische Spinnmaterialien herstellen lassen, die eine gleichmäßige Verteilung der Leuchtkristalle und eine verbesserte Nachleuchtkraft aufweisen. Außerdem liegt der Erfindung die Aufgabe zugrunde, ein Textilerzeugnis mit einer verbesserten Nachleuchtkraft zur Verfügung zu stellen.

Verfahrensgemäß wird die erste Aufgabe durch die kennzeichnenden Merkmale des Anspruches 1 gelöst. Demnach werden pulverförmiger Kunststoff und die Leuchtkristalle zunächst homogen vermengt. Dann wird das Gemenge pelletiert, wobei die Kristalle enthaltenden Kunststoffpellets erzeugt werden. Infolge der gleichmäßigen Verteilung der Leuchtkristalle in den Pellets können diese, gegebenenfalls zusammen mit leuchtstofffreien Kunststoffpellets, in einen einfachen Extruder gefüllt werden, der keine Mischaufgabe hat. Deshalb sind die Kristalle bereits relativ geringen Scherkräften ausgesetzt. Bis zum Aufschmelzen der Pellets kurz vor der Spinndüse wird überdies eine Entmischung der schwereren Leuchtkristalle verhindert, so daß sehr homoge ne Spinnmaterialien resultieren. Außerdem schützt der Kunststoffmantel die eingeschlossenen Leuchtkristalle vor Scherkräften, die deren Leuchtkraft mindern könnten. Der Größenbereich der Leuchtkristalle von 10 bis 40 $\mu$m ist dabei besonders vorteilhaft, weil er Kristalle ausreichender Leuchteigenschaft bedingt, die den Extrudiervorgang praktisch nicht stören. Während des Extrudierens werden die Kristalle in einer Zufallsverteilung in die Kunststoffmasse eingebettet. Das Extrudat enthält daher in jeder Schicht Leuchtkristalle, die zum Teil auch übereinander angeordnet sein können. Wichtig für den Nachleuchteffekt ist jedoch, daß in unmittelbarer Nähe zur Oberfläche des Extrudates möglichst viele Leuchtkristalle nebeneinander angeordnet sind. Dies wird in einem weiteren Schritt des erfindungsgemäßen Verfahrens durch Streckung des erhaltenen Extrudates erreicht. Die Streckung bewirkt eine Verminderung der Dicke bzw. des Durchmessers, wodurch automatisch die in den tieferen Schichten des Extrudates befindlichen Leuchtkristalle näher an dessen Oberfläche gelangen bzw. ursprünglich übereinander angeordnete Kristalle nebeneinander zu liegen kommen. Da eine Verstreckung des Extrudates ohnehin zur Orientierung und damit zur Erhöhung der Stabilität des Kunststoffes notwendig ist, stellt das erfindungsgemäße Verfahren keinen zusätzlichen Aufwand dar im Vergleich zur üblichen Herstellung synthetischer Spinnmaterialien.

Durch das erfindungsgemäße Verfahren wird erreicht, daß die Leuchtkristalle in dem fertigen Spinnmaterial von einer Kunststoffschicht umhüllt sind. Dies schützt die Kristalle vor mechanischen Einwirkungen, insbesondere Scherkräften, die zu einer Verkleinerung und damit zu einer Verringerung der Leuchtkraft der Kristalle führen. Es ist darüber hinaus auch möglich, den Kunststoff mit einem UV-Inhibitor zu versetzen, wodurch der lichtinduzierte Zerfall der Kristalle verringert bzw. vermieden wird.

Die Verstreckung des Extrudates kann zu einem Spinnmaterial führen, dessen Dicke bzw. Durchmesser nur unwesentlich über dem Durchmesser der Leuchtkristalle liegt. Auf jeden Fall sollte die Dicke des Spinnmaterials nach dem Verstrekken nicht mehr als das 10-fache der Kristallgröße betragen, da, wie oben ausgeführt, sonst ein Großteil der Kristalle nicht mehr zu einem nach außen erkennbaren Nachleuchteffekt beiträgt.

Erfindungsgemäß können die üblichen Leuchtkristalle aus den Gruppen der Sulfide, Lenard-Phosphore oder Reinstoffphosphore verwendet werden. Als besonders vorteilhaft hat sich der Einsatz von Metallsulfiden, insbesondere Zinksulfid erwiesen, das mit Kupfer dotiert ist. Es sind aber andere Sulfide z.B. Calcium- oder Magnesiumsulfid bzw. wei tere Dotierungsmaterialien wie Silber, Thallium usw. verwendbar.

Geeignete Kunststoffe können aus den herkömmlicherweise in der Textilverarbeitung eingesetzten Gruppen ausgewählt werden. So lassen sich z.B. durch Polykondensation hergestellte Kunststoffe wie z.B. Polyester, Polyamid, Polyether oder polymerisierte Verbindungen wie z.B. Polyethylen, Polypropylen, Polyacryl oder Polyvinylchlorid etc. verarbeiten. In Grenzen geeignet sind auch Polyurethane, soweit sie thermoplastische Eigenschaften aufweisen.

Die Spinnstoffe können als Folien, Bändchen, Multifile oder Monofile gespritzt und als Fasern, Filamente oder Garne bzw. Zwirne weiterverarbeitet werden.

Um die Produktionsleistung zu erhöhen, kann das Verfahren so durchgeführt werden, daß mehrere Fäden bzw. Fasern gleichzeitig extrudiert werden. Dies kann beispielsweise dadurch erreicht werden, daß am Extruderausgang eine Viellochplatte vorgesehen wird.

Die erfindungsgemäß hergestellten Spinnmaterialien können für sich allein aber auch im Gemisch mit anderen herkömmlichen Materialien z.B. zu Garnen verarbeitet werden. Es kann dabei davon ausgegangen werden, daß ein Anteil von ca. 20 % der erfindungsgemäßen Spinnmaterialien am fertigen Textilprodukt bereits einen ausreichenden Nachleuchteffekt gewährleistet. Denkbar ist es z.B. weiterhin auch, nachleuchtende Fasern mit reflektierenden oder fluoreszierenden Fasern zu vereinigen, um solcherart eine Wirkung bei Tag und bei Nacht zu erzielen. Auch wechselweise Verarbeitung nebeneinander von verschiedenen Materialien erzeugt gute Effekte.

Fertige, mit nachleuchtenden Spinnmaterialien hergestellte, Textilprodukte können z.B. Teppichfloren sein, in die ein Leuchtstreifen eingearbeitet ist (z.B. zur Markierung von Notausgängen in Flugzeugen und Hotels), oder Leinen, wie sie z.B. in Bergwerksstollen als Rettungsleinen verwendet werden. Weiterhin ist es denkbar, nachleuchtende Spinnmaterialien bei der Herstellung von Schwimmwesten, Feuerwehrschläuchen, Gurten, Planen, modischen Kleidungsartikeln sowie Sicherheitskleidung und vielerlei mehr einzusetzen. Generell läßt sich das Spinnmaterial überall dort einsetzen, wo auch herkömmliches Spinnmaterial verarbeitet wird und ein Nachleuchteffekt aus Sicherheitsgründen oder zu Dekorationszwecken oder dergleichen wünschenswert ist.

Bezüglich des Textilerzeugnisses wird die zweitgenannte Aufgabe durch das kennzeichnende Merkmal des Anspruches 8 gelöst. Die lichtreflektierenden Fasern oder Fäden bzw. der lichtreflektierende Kern des Textilerzeugnisses tragen zu dessen Nachleuchtkraft bei, indem sie das durch die nachleuchtenden Fasern einfallende Licht wieder nach außen reflektieren und dadurch den Anregungseffekt erhöhen. Die lichtreflektierenden Bestandteile des Textilerzeugnisses können dessen Zugfestigkeit erhöhen und eine durch die nachleuchtenden Kristalle bedingte Schwächung der Faserfestigkeit kompensieren. Die Steigerung des Nachleuchteffektes stellt sich unabhängig von der Herstellungsweise des nachleuchtenden Fasermaterials ein und ist auch bei schwach nachleuchtenden Fasern herkömmlicher Art zu verzeichnen.

Ausgestaltungen des erfindungsgemäßen Textilerzeugnisses sind in den Unteransprüchen 9 bis 14 angegeben.

Verarbeitungsprodukte der erfindungsgemäß hergestellten Spinnmaterialien, die besonders vielfältig einsetzbar sind, sind z.B. Seile in gedrehter wie geflochtener Machart. In einer bevorzugten Ausgestaltung der Erfindung werden Litzen gedreht, die innen bevorzugt reflektierende Garne oder eine Drahtlitze und außen bevorzugt Garne mit nachleuch tenden Fasern haben. Diese Litzen können nun ihrerseits um einen zugfesten länglichen Kern herum miteinander verflochten oder geschlagen werden, so daß ein Seil entsteht, dessen zentraler Teil durch den Kern und dessen äußerer Bereich durch den Textilanteil gebildet wird. Es können aber auch Garne um den zugfesten Kern geflochten werden. Der zugfeste Kern wird dabei reflektierend bzw. weiß ausgebildet, so daß er durch die geflochtenen Bündel hindurch einfallendes Licht wieder nach außen reflektiert und dadurch den Anregungseffekt erhöht. Je nach Anwendungszweck des Seiles kann der Kern aus Stahl, z.B. bei Trossen zum Festmachen von Schiffen oder aus Kunststoff z.B. für besonders haltbare Seile für den Bergsport ausgebildet werden. Auf dem Seil kann weiterhin eine durchsichtige Kunststoffhülle angeordnet werden, die ein Verschmutzen der nachleuchtenden Fasern verhindert und ihrerseits leicht abwaschbar ist.

Im folgenden wird ein Beispiel für den Aufbau eines solchen Seiles gegeben. Der längliche Kern des Seiles besteht aus Stahl, der Textilanteil besteht aus Polypropylen als Grundmaterial. Dabei macht der massive Stahlkern 40 % des Gesamtseildurchmessers aus. Der den Kern umgebende geflochtene Polypropylenfaserteil enthält zu 20 % Fasern bzw. Fäden, denen in der erfindungsgemäßen Weise mit Kupfer dotiertes Zinksulfid als Leuchtkristalle zugesetzt worden sind. Der Anteil der Kristalle beträgt 20 bis 30 Gew.-% bezogen auf die Gesamtmenge an extrudiertem nachleuchtendem Spinnmaterial.

Als weiteres, zur Erläuterung der Erfindung gedachtes, Beispiel soll die Zusammensetzung eines mit nachleuchtendem Spinnmaterial hergestellten Feuerwehrschlauches beschrieben werden. Die Herstellung des Schlauches erfolgt durch Verweben von Polyestergarnen. In entsprechender Weise hergestellte nachleuchtende Polyestergarne können beim Webvorgang sowohl als Kett- als auch als Schußfaden mit eingearbeitet werden. Um einen gut sichtbaren Schlauch zu erhalten, muß der Anteil an nachleuchtendem Garn mindestens 20 % betragen. Bei dem hier beschriebenen Feuerwehrschlauch beträgt der Anteil 25 %. Darüber hinaus kann der Schlauch mit einer Hülle aus durchsichtigem PVC umgeben werden, die ein leichtes Abwaschen ermöglicht.

## Ansprüche

1. Verfahren zur Herstellung nachleuchtender synthetischer Spinnmaterialien, insbesondere Fasern, Fäden oder Folien, bei dem ein Kunststoff aus der Gruppe der Thermoplaste zusammen mit Leuchtkristallen extrudiert wird, dadurch gekennzeichnet, daß die Leuchtkristalle einer Größe im Bereich von 10 bis 40 μm vor dem Extrudieren mit zumindest einem Teil des in Pulverform vorliegenden Kunststoffes vermengt wird, dann das Gemenge pelletiert wird, anschließend die Kristalle enthaltenden Kunststoffpellets ggfs. zusammen mit leuchtstoffreiem Kunststoff in den Extruder eingegeben werden, und das erhaltene Extrudat in einem weiteren Schritt verstreckt wird.

2. Verfahren nach Anspruch 1, dadurch gekennzeichnet, daß das Spinnmaterial nach der Verstreckung eine Dicke bzw. einen Durchmesser aufweist, die bzw. der das 1,2- bis 10-fache des mittleren Durchmessers der eingesetzten Leuchtkristalle beträgt.

3. Verfahren nach einem der Ansprüche 1 und 2, dadurch gekennzeichnet, daß der Kunststoff mit einem UV-Inhibitor versetzt wird.

4. Verfahren nach einem der Ansprüche 1 bis 4, dadurch gekennzeichnet, daß als Leuchtkristalle Metallsulfide, insbesondere Zinksulfid, eingesetzt werden.

5. Verfahren nach einem der Ansprüche 1 bis 4, dadurch gekennzeichnet, daß der Kunststoff aus den Gruppen der durch Polykondensation hergestellten Verbindungen, insbesondere Polyester, oder der durch Polymerisation hergestellten Verbindungen, insbesondere Polypropylen, Polyethylen oder Polyvinylchlorid, ausgewählt wird.

6. Verfahren nach einem der Ansprüche 1 bis 5, dadurch gekennzeichnet, daß die Extrudermasse in mehreren Fäden bzw. Fasern extrudiert wird.

7. Verfahren nach den Ansprüchen 1 bis 5, dadurch gekennzeichnet, daß die Extrudermasse als Splitfolie extrudiert wird.

8. Textilerzeugnis, insbesondere Gewebe, Seil, Gurt oder Schlauch, mit nachleuchtenden Fasern oder Fäden, die insbesondere nach dem Verfahren der Ansprüche 1 bis 7 hergestellt sind, dadurch gekennzeichnet, daß es lichtreflektierende Fasern oder Fäden und/oder einen lichtreflektierenden Kern enthält.

9. Textilerzeugnis nach Anspruch 8, nämlich Seil, Gurt oder Schlauch, dadurch gekennzeichnet, daß der Kern als trägfähiger länglicher Kern aus Stahl oder Kunststoff mit lichtreflektierender Oberfläche ausgebildet ist, daß um den Kern nachleuchtende Fasern geflochten, gedreht oder gewebt sind, und daß der um den Kern geflochtene, gedrehte oder gewebte Textilanteil des Seiles, Gurtes oder Schlauches zu 20 bis 60 % aus nachleuchtendem Spinnmaterial besteht.

10. Textilerzeugnis nach Anspruch 9, dadurch gekennzeichnet, daß der tragfähige längliche Kern mit reflektierender Oberfläche ein Gewebeschlauch ist.

11. Textilerzeugnis nach einem der Ansprüche 9 oder 10, dadurch gekennzeichnet, daß der um den Kern geflochtene, gedrehte oder gewebte Textilanteil des Seiles auch lichtreflektierende oder fluoreszierende Fasern oder Fäden enthält.

12. Textilerzeugnis nach einem der Ansprüche 8 bis 11, dadurch gekennzeichnet, daß es ein Gewebe aufweist, dessen Fäden in einer Richtung mindestens teilweise nachleuchtend und in der anderen, die erste kreuzende Richtung mindestens teilweise lichtreflektierend ausgebildet sind.

13. Textilerzeugnis nach einem der Ansprüche 8 bis 11, dadurch gekennzeichnet, daß es ein Gewebe mit einem unterliegenden, reflektierenden Flächengebilde aufweist.

14. Textilerzeugnis nach einem der Ansprüche 8 bis 13, dadurch gekennzeichnet, daß es eine durchsichtige Kunststoffhülle aufweist.